**Europäisches Patentamt**

**European Patent Office**

**Office européen des brevets**

(19)

(11) Veröffentlichungsnummer : **0 087 003**
**B1**

(12)　　　　　　　EUROPÄISCHE PATENTSCHRIFT

(45) Veröffentlichungstag der Patentschrift :
26.06.85

(51) Int. Cl.⁴ : **F 15 B 13/02**

(21) Anmeldenummer : **83100884.2**

(22) Anmeldetag : **31.01.83**

(54) **Mengenteiler.**

(30) Priorität : **16.02.82 DE 3205368**

(43) Veröffentlichungstag der Anmeldung :
**31.08.83 Patentblatt 83/35**

(45) Bekanntmachung des Hinweises auf die Patenterteilung : **26.06.85 Patentblatt 85/26**

(84) Benannte Vertragsstaaten :
**AT BE CH FR GB IT LI LU NL SE**

(56) Entgegenhaltungen :
**DE-A- 2 446 802**
**US-A- 3 481 489**
**US-A- 3 722 524**
**US-A- 4 121 601**
**HYDRAULICS & PNEUMATICS, Band 35, Nr. 1, Januar**
**1982, Cleveland, Ohio, USA "Hydraulically-operated**
**platform stays level", Seite 27**

(73) Patentinhaber : **Heilmeier & Weinlein Fabrik für**
**Oel-Hydraulik GmbH & Co. KG**
**Neumarkter Strasse 26**
**D-8000 München 80 (DE)**

(72) Erfinder : **Brunner, Rudolf**
**Wankstrasse 23**
**D-8011 Baldham (DE)**

(74) Vertreter : **Patentanwälte Grünecker, Dr. Kinkeldey,**
**Dr. Stockmair, Dr. Schumann, Jakob, Dr. Bezold,**
**Meister, Hilgers, Dr. Meyer-Plath**
**Maximilianstrasse 58**
**D-8000 München 22 (DE)**

## Beschreibung

Die Erfindung betrifft einen Mengenteiler der im Oberbegriff des Hauptanspruchs angegebenen Art.

Aus der US-A-3481 489 ist ein Mengenteiler dieser Bauart bekannt. Zur formschlüssigen Kopplung tragen beide Regelkolben einen einstückig angeformten hakenartigen Fortsatz. Die hakenartigen Fortsätze hintergreifen einander. Wenn die Regelkolben bis in die durch die Fortsätze begrenzte Endstellung voneinander wegbewegt sind, erzeugen die sich verhakenden Fortsätze exzentrisch gerichtete Kräfte an den Regelkolben, wodurch diese zum Verklemmen in der Innenbohrung neigen. Auch wenn die Regelkolben bis zur Anlage der Fortsätze an den Stirnenden der Regelkolben aufeinander zubewegt worden sind, treten exzentrische Kräfte auf, die zum Verkanten der Regelkolben in der Innenbohrung führen. Die Fortsätze erzeugen solche exzentrische Kräfte konstruktionsbedingt auch bei sorgfältigster Formung bzw. Bearbeitung der gegenseitigen Kontaktbereiche. Solche Mengenteiler haben aber die Aufgabe, außerordentlich feinfühlig und lastunabhängig Hydraulikströme zu teilen bzw. in entgegengesetzter Strömungsrichtung zu vereinigen. Das Arbeitsspiel der Regelkolben wird aber durch diese Klemmkräfte behindert, was in der Charakteristik des Mengenteilers bemerkbar macht. Wenn beispielsweise die beiden Greiferhälften eines Baggers über den Mengenteiler gesteuert werden, führt eine Verklemmung der durch die Kupplungsvorrichtung verbundenen Regelkolben zu einem Zurückbleiben bzw. Voreilen der einen Greiferhälfte gegenüber der anderen. Ein weiterer Nachteil des bekannten Mengenteilers liegt in der aufwendigen und teueren Herstellung der Regelkolben mit ihren hakenartigen Fortsätzen.

Bei einem aus der DE-A-2446 802, Fig. 4, bekannten Mengenteiler der gleichen Art werden zwei voneinander verschiedene Regelkolben kombiniert, wobei der eine einen im Querschnitt T-förmigen Fortsatz besitzt, der in eine entsprechend geformte Quernut des anderen Regelkolbens eingreift und mit dieser die Kopplungsvorrichtung bildet. Mit dieser Kopplungsvorrichtung werden die beiden Regelkolben in ihren beiden Endstellungen starr miteinander gekoppelt, d. h. sie bilden unter den einwirkenden Zug- oder Druckkräften ein starres System, in dem die beiden Regelkolben keine Versetz- oder Winkelbewegungen in dem jeweiligen Abstützbereich ausführen können. Da sich aber in der Praxis trotz sorgfältigster Bearbeitung geringe Versetzungen zwischen den beiden Innenbohrungsabschnitten oder eine Winkelabweichung zwischen den Längsachsen der Innenbohrungsabschnitte nicht vermeiden lassen, und da derartige Fertigkeitsungenauigkeiten auch noch durch Verspannungen, Druck- oder Temperatureinflüsse verstärkt werden, neigen die beiden derart starr miteinander gekoppelten Regelkolben wiederum zum Verklemmen in den Innenbohrungen, wenn sie ihre Arbeitsspielbewegung ausführen sollen. Es ist dabei hervorzuheben, daß derartige Mengenteiler beu außerordnetlich hohen Drücken arbeiten, aus denen große Relativkräfte resultieren. Jedoch müssen die Regelkolben sehr leichtgängig in den Innenbohrungsabschnitten gleiten, was sich erfahrungsgemäß nicht erreichen läßt, da diese beiden Regelkolben eine beträchtliche Länge innerhalb der Innenbohrung beanspruchen.

Es ist weiterhin aus der US-A-3722 524 ein Mengenteiler einer anderen Art bekannt, bei dem die beiden Regelkolben in ihren Innenbohrungsabschnitten gegen eine Verdrehung geführt sind und an ihren zueinander weisenden Stirnflächen jeweils eine Schrägfläche aufweisen. Mit diesen Schrägflächen liegen sie an einem kugelförmigen Strömungsdrosselglied an, das quer zur Längsachse der Innenbohrung verstellbar ist. Mit der Verstellung dieses Gliedes kann der jeweilige Abstand zwischen den Regelkolben verändert werden. Es handelt sich hierbei um keine Kopplungsvorrichtung, sondern um eine Spreizvorrichtung. Wenn die beiden Regelkolben von seiten des Drosselgliedes angeströmt werden, sind sie nicht miteinander gekoppelt und können deshalb keine synchrone Bewegung ausführen, wie es für einen Mengenteiler erforderlich ist. Nur in der umgekehrten Anströmrichtung zum Drosselglied hin werden sie über dieses miteinander gekoppelt und können eine Arbeitsspielbewegung ausführen, mit der sie die Funktion eines Mengenteilers erfüllen. Abgesehen davon, daß durch die Verdrehsicherung der Regelkolben Reibungskräfte für die Verdrehsicherung unvermeidbar sind, die das Regelverhalten verschlechtern, wird, bei der letztgenannten Anströmart durch die Anpressung der schrägen Stirnflächen an die Kugeloberfläche des Drosselgliedes für jeden Regelkolben eine starke und annähernd der Hälfte der axialen Druckkraft entsprechende Klemmkraft für den Regelkolben in seinem Innenbohrungsabschnitt erzeugt, so daß bei dieser Anströmart das Regelverhalten außerordentlich schlecht ist. Die am kugelförmigen Drosselglied wirksame Reaktionskraft aus dem Andruck der beiden Regelkolben preßt das Glied auf seine Abstützfläche, so daß auch in diesem Bereich eine starke Reibung auftritt, die bei der letztgenannten Anströmart das Regelverhalten des Mengenteilers stört.

Der Erfindung liegt die Aufgabe zugrunde, einen Mengenteiler der eingangs genannten Art zu schaffen, der nicht nur einfacher herstellbar ist, als der bekannte, sondern der sich durch eine einwandfreie Regelcharakteristik infolge Fehlens jeglicher Klemmkräfte an den Regelkolben auszeichnet.

Die gestellte Aufgabe wird erfindungsgemäß durch die im kennzeichnenden Teil des Hauptanspruchs angegebene Merkmale gelöst.

Bei dieser Ausbildung stütz sich jeder Regelkolben an der Kopplungsrichtung kugelgelenkartig ab, was vermeidet, daß exzentrische Reaktionskräfte entstehen, die dann zum Verklemmen der Regelkolben in der Innenbohrung führen. Bei dieser Art der Verbindung ist es sogar möglich, geringfügige axiale Versetzungen zwischen den Regelkolben auszugleichen. Obwohl die Verbindung in den Endstellungen in Zug- bzw. Druckrichtung beider Regelkolben starr ist, bleibt eine relative seitliche Beweglichkeit und eine Selbstzentrierung beibehalten. Aus dieser Ausbildung resultiert ein einwandfreies Regelverhalten des Mengenteilers, da das Arbeitsspiel der beiden Regelkolben durch keine Klemmkräfte beeinflußt ist.

Eine weitere, zweckmäßige Ausführungsform der Erfindung geht aus Anspruch 2 hervor. Bei dieser Ausbildung wird in beiden relativen Endlagen der Regelkolben eine Verbindung über kugelgelenkartige Abstützungen vorgesehen, die das Entstehen der Klemmkräfte unterbinden und sogar Achsversetzungen oder herstellungsbedingte Ungenauigkeiten inder Führung der Regelkolben kompensieren.

Das angestrebte Ziel wird mit technisch geringem Aufwand bei einer weiteren Ausführungsform erreicht, wie sie Anspruch 3 angibt. Anstelle der beiden beim Stand der Technik zusammenarbeitenden hakenartigen Fortsätze ist hier nur ein durchgehendes Element vorgesehen, das zur Bildung der kugelgelenkartigen Verbindungsbereiche mit den Regelkolben zusammenwirkt. Es liegt auf der Hand, daß sich dieses Element koaxial mit den beiden Regelkolben anordnen läßt, so daß jegliche exzentrisch wirkenden reaktionskräfte vermieden werden und nur exakt in Achsrichtung verlaufende Kraftkomponenten vorliegen.

In der Praxis hat sich besonders eine Ausführungsform bewähren können, wie sie Anspruch 4 erlaütert. Bei deiser Ausbildung der Regelkolben ist deren Herstellung einfach. Ferner ist die Montage des Mengenteilers problemlos. Die Reaktionskräfte zwischen der Kopplungsvorrichtung und den Regelkolben werden auch bei hohen Arbeitsdrücken großflächig und gleichmäßig verteilt.

Aus herstellungstechnischen Gründen ist es weiterhin zweckmäßig, wenn die Merkmale von Anspruch 5 gegeben sind, da die Formung der kugeligen Lagerflächen schwieriger ist, als die Formung der kegeligen Auflageflächen, die in den Regelkolben angeordnet sind.

Hinsichtlich des technischen Aufwandes und der einfachen Montage ist weiterhin eine Ausführungsform zweckmäßig, wie sie Anspruch 6 angibt.

Obwohl zum Erreichen eines einwandfreien Regelverhaltens es ausreicht, die Kopplungsvorrichtung so auszubilden, daß sie bei auseinandergezogenen Regelkolben mit kugelgelenkartigen Abstützungen arbeitet, muß auch dafür Sorge getragen werden, daß bei zueinander geschobenen Regelkolben diese einwandfrei zentriert und aufeinander ausgerichtet sind, ohne daß Klemmkräfte entstehen. Dies kann bei einer einfachen Ausführungsform gemäß Anspruch 7 oder auch bei einer noch einfacheren Ausführungsform gemäß Anspruch 8 erfolgen, wo dann die Regelkolben entweder an den Anlageflächen des Bundes abgestützt und zentriert oder über die Stirnflächen der Ringflansche unmittelbar aneinander abgestützt und zentriert werden.

Zweckmäßiger ist jedoch die Ausführungsform gemäß Anspruch 9, da dann auch auf besonders einfache Weise bei zusammengeschobenen Regelkolben kugelgelenkartige Abstützungen vorliegen, die Achsversetzungen oder herstellungsbedingte Ungenauigkeiten kompensieren.

Da das allgemeine Bestreben besteht, auf einem Grundelement eines Mengenteilers aufbauend diesen an unterschiedliche Durchsätze baukastenartig anpassen zu können, ist auch das Merkmal von Anspruch 10 wichtig. Bei der erfindungsgemäßen Ausbildung des Mengenteilers läßt sich eine Umstellung auf einen anderen Durchsatz allein durch Austausch der Durchflußblenden in den Regelkolben bewerkstelligen.

Besonders einfach läßt sich die Umstellung durchführen, wenn die Merkmale der Ansprüche 11 und 12 gegeben sind.

Ein weiterer, wichtiger Gedanke ist auch in Anspruch 13 enthalten. Die Auflageflächen lassen sich nämlich bei der Herstellung der Durchflußblenden ohne nennenswerten Mehraufwand schon entsprechend vorformen.

Ein weiterer, zweckmäßiger Gedanke ist in Anspruch 14 enthalten. Diese Federn, die ansich für das Arbeiten des Mengenteilers nicht benötigt werden, sorgen für eine Grundstellung des Regelkolben nach einem vollständigen Druckabbau bzw. sorgen für einen vorbestimmten Anfangsbereich der Regelkennlinie des Mengenteilers.

Dabei ist es zweckmäßig, wenn das Merkmal von Anspruch 15 realisiert ist, da dann zumindest die mittlere Feder zwischen den beiden regelkolben einwandfrei zentriert ist.

Schließlich ist auch das Merkmal von Anspruch 16 noch zweckmäßig, da in diesem Bereich der Regelkolben genügend Platz vorhanden ist, um großzügige Strömungsdurchgänge vorzusehen, die kein merkbares Druckgefälle auch bei hohem Durchsatz verursachen können.

Nachstehend werden anhand der Zeichnungen zwei Ausführungsbeispiele des Erfindungsgegenstandes erläutert.

Es zeigen

Figur 1a die rechte Hälfte einer ersten Ausführungsform eines Mengenteilers im Längsschnitt, und

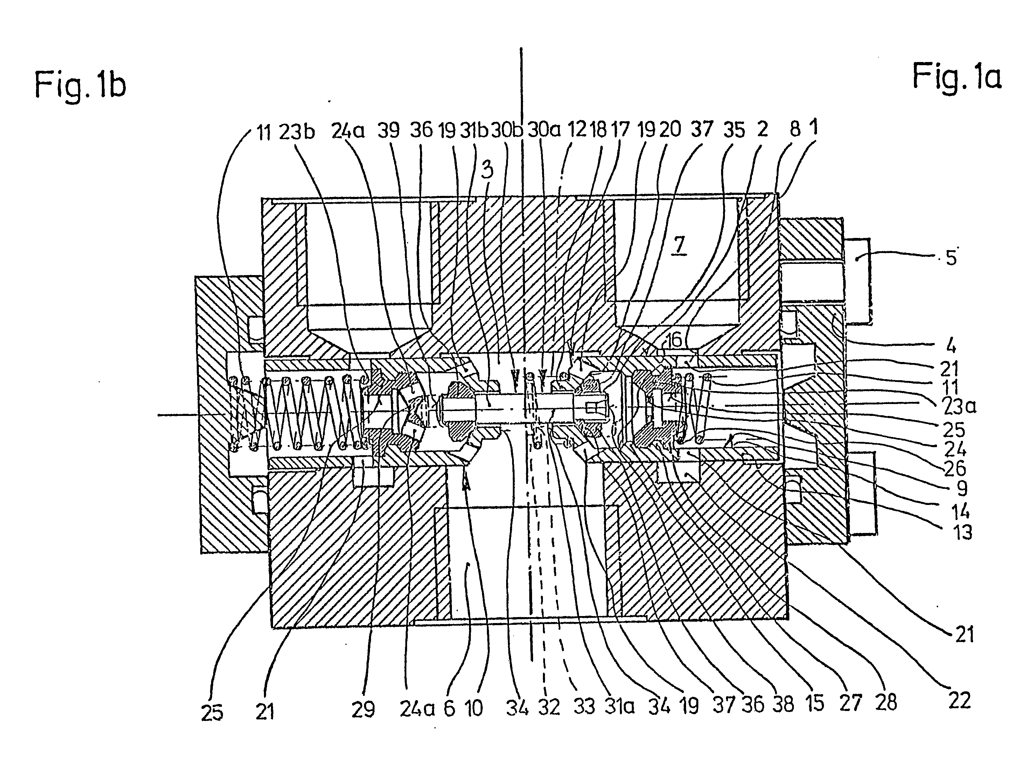

Figur 1b die linke Hälfte einer zweiten Ausführungsform eines Mengenteilers.

Ein Mengenteiler zum lastunabhängigen Teilen eines Hydraulikstromes bzw. zum lastunabhängigen Zusammenführen zweier Hydraulikströme in einen einzigen Hydraulikstrom besteht aus einem quaderförmigen Grundkörper 1 mit einer längsdurchgehenden Innenbohrung 2, die durch einen mittleren Ringabschnitt 3 in zwei Bohrungsabschnitte unterteilt ist. Die Innenbohrung ist an beiden Enden durch je einen Deckel 4 verschlossen, der mit Schrauben 5 am Körper 1 festgelegt ist. In den mittleren ringförmigen Bereich 3 der Innenbohrung 2 mündet ein Hauptanschluß 6, während symmetrisch zum Hauptanschluß seitlich versetzte und gegenüberliegende Verbraucheranschlüsse 7 über verengte Mündungen 8 in die Innenbohrung 2 münden.

In der Innenbohrung 2 sind zwei identische Regelkolben 9 oder 10 zueinander spiegalbildlich angeordnet und verschiebbar geführt, die sich an den Deckeln 4 abstützende Druckfedern 11 zueinander und eine dazwischen angeordnete Druckfeder 12 voneinander weg beaufschlagen.

Die Regelkolben 9, 10 der beiden Ausführungsformen (Fig. 1a, 1b) besitzen einen hohlzylindrischen Mantel 13 mit einer Innenbohrung 14 und einem Innengewindeabschnitt 15, der zu einem vorderen Bohrungsabschnitt 16 überleitet. Die zueinanderweisenden Enden 17 der Regelkolben sind trichterförmig bis zu einem Ringflansch 18 eingezogen. Im Ende 17 sind schräg einwärts gerichtete Durchgangsöffnungen 19 zum Inneren der Regelkolben 9, 10 geführt. Im Ende 17 ist innen eine kegelförmige Auflagefläche 20 angeordnet.

Im Mantel 13 sind radiale Regelöffnungen 21 ausgebildet, die zu einem Ringraum 22 bzw. der Mündung 8 der Verbraucheranschlüsse 7 führen. In der Zeichnung ist der volle Querschnitt der Regelöffnungen 21 zu den Verbraucheranschlüssen 7 frei. Es liegt auf der Hand, daß bei einer Bewegung der Regelkolben 9 bzw. 10 aus der gezeichneten Stellung nach links oder rechts der Durchflußquerschnitt durch die Regelöffnungen 21 entsprechend verringert wird.

Im Innengewindeabschnitt 15 des Regelkolbens 9 der Ausführungsform von Fig. 1a ist eine Durchflußblende 23a eingeschraubt, die eine Blendenöffnung 24 vorgegebener Größe sowie eine Einschrauböffnung 25 zum Ansetzen eines nicht gezeigten Drehwerkzeugs aufweist. Am der Feder 11 zugewandten Ende der Durchflußblende 23a ist ein Federsitz 26 ausgebildet. Eine Schulter 28 der Durchflußblende 23a liegt gegen eine Schulter 27 am Beginn des Innengewindeabschnittes 15 an.

Die Regelkolben 9 der Ausführungsform von Fig. 1a sind über eine Kopplungsvorrichtung 30a so verbunden, daß sie in beiden Endstellungen gemeinsam und in allen Zwischenstellungen in einem von der Kopplungsvorrichtung 30a begrenzten Bereich relativ zueinander Längsbewegungen in der Innenbohrung 2 auszuführen vermögen.

Die Kopplungsvorrichtung 30a besteht aus einem zylindrischen Schaft 31a, der bei Ausführungsform gemäß Fig. 1a in der Mitte seiner Längserstreckung einen umlaufenden Bund 32 mit Anlageflächen 33 trägt. Entsprechende Anlageflächen 34 sind auch an den Ringflanschen 18 der Regelkolben angeordnet.

Beide Enden des Schaftes 31a tragen einen Außengewindeabschnitt 35, auf dem jeweils ein Zugteil 36, hier eine Sechskantmutter, aufgeschraubt ist. Der Zugteil 36 weist — der Auflagefläche 20 zugewandt — eine ballige Lagerfläche 37 auf. Die mit 38 bezeichneten, freien Enden des Schaftes 31a sind abgeflacht.

Das Arbeiten eines Mengenteilers ist bekannt, so daß nur zu erwähnen ist, daß sich bei einer Druckbeaufschlagung aus dem Hauptanschluss 6 die beiden Regelkolben voneinander wegbewegen, bis sie über die Kopplungsvorrichtung 30a in der einen Endstellung abgefangen werden. Das eigentliche Arbeitsspiel der starr gekoppelten Regelkolben wird durch das Druckgefälle zwischen den Blendenöffnungen und den Regelöffnungen beider Regelkolben bewirkt. Es stellt sich stets ein Gleichgewichtszustand ein, so daß in beiden Anschlüssen 7 die gleichen Mengen fließen. Durch ein Überschneiden der Steueröffnungen 21 mit den Mündungen 8 erfolgt die Regelung so, daß jeder Verbraucheranschluß 7 lastunabhängig mit einem vorbestimmten Ölstrom versorgt wird. Dazu bewegen sich die Regelkolben in Abhängigkeit von den Druckverhältnissen in den Verbraucheranschlüssen 7 in der Innenbohrung 2 hin und her.

Sobald die Teilströme aus den Verbraucheranschlüssen 7 vereinigt und durch den Hauptanschluß 6 abgeführt werden sollen, gleiten zunächst die beiden Regelkolben 9 und 10 gegeneinander, bis bei der Ausführungsform gemäß Fig. 1a ihre Anlageflächen 34 am Bund 32 anliegen und sie starr miteinander gekoppelt sind. Dann stellt sich wieder ein Arbeitsspiel ein, sodaß die Ölströme aus den Verbraucheranschlüssen 7 lastunabhängig vereinigt werden.

Bei bis in die Endstellung auseinandergeschobenen Regelkolben werden die Zugkräfte von den Auflageflächen 20 an die balligen Lagerflächen 37 und in die Kopplungsvorrichtung 30a übertragen, wobei die Übertragungsbereiche kugelgelenkartig ausgebildet sind. Diese Ausbildung vermeidet exzentrische Reaktionskräfte an den Regelkolben und kompensiert auch gegebenenfalls herstellungsbedingte Ungenauigkeiten, z. B. nicht exakt fluchtende Achsen der Regelkolben oder Abweichungen von einem geraden Innenbohrungsverlauf. Da die Reaktionskräfte zwischen der Kopplungsvorrichtung 30a und den Regelkolben 9 und 10 um die durchgehende Längsachse gleichmäßig verteilt auftreten, können auch hier keine exzentrischen oder schrägen Kräfte entstehen. Das gleiche gilt dann, wenn in der anderen Endstellung die Anlageflächen 34 am Bund 32 anstehen, da auch dann eine exakt zentrische Abstützung gegeben ist.

Die Ausführungsform von Fig. 1b unterscheidet sich von der vorher beschriebenen dadurch, daß neben der kugelgelenkartigen Abstützung zwischen den Zugteilen 36 und den Enden 17 der Regelkoben 9,10 bei bis in die Endstellung auseinandergeschobenen Regelkolben zusätzlich auch eine kugelgelenkartige Abstützung bei bis in die andere Endstellung gegeneinandergeschobenen Regelkolben vorgesehen ist. Zu diesem Zweck sind in die Regelkolben 10 Durchflußblenden 23b mit nach außen versetzten Blendenöffnungen 24a eingesetzt. Zwischen den Blendenöffnungen 24a ist an der Vorderseite jeder Durchflußblende 23b eine kegelförmige Auflagefläche 29 vorgesehen, die auf das kugelig oder ballig ausgeführte Ende 39 des Schaftes 31b der Kopplungsvorrichtung 30b dieser Ausführungsform ausgerichtet ist.

Es liegt auf der Hand, daß bei der Ausführungsform von Fig. 1b ein Bund 32 am Schaft entbehrlich ist, da bei zueinandergeschobenen Regelkolben 9 die balligen Enden 39 an den kegeligen Auflageflächen 29 anliegen, ehe die Ringflansche 18 in gegenseitigen Kontakt treten können. Denkbar wäre es auch, einen Regelkolben mit einem zentrischen, verlängerten Schaft zu versehen, der in den anderen Regelkolben ragt und dort in beiden Endstellungen eine kugelgelenkartige Abstützung findet.

**Patentansprüche**

1. Mengenteiler zur lastunabhängigen Teilung eines Hydraulikstroms bzw. zum lastunabhängigen Zusammenführen zweier Hydraulikströme in einen einzigen Hydraulikstrom, mit einem eine Innenbohrung (2) enthaltenden Grundkörper (1), der einen mittigen Hauptanschluß (6) und zwei außenliegenden Verbraucheranschlüssen (7) zur Innenbohrung aufweist, und mit zwei in der Innenbohrung (2) verschiebbar geführten, hohlzylindrischen, vom Hydraulikmedium durchströmten Regelkolben (9, 10), die jeweils eine Durchflußblende (23a, 23b) und wenigstens eine radiale, mit einem Verbraucheranschluß (7) zusammenwirkende Regelöffnung (21) aufweisen und die durch eine Kopplungsvorrichtung (30a, 30b) begrenzt aufeinander zu- und voneinander wegbewegbar verbunden sind, wobei die Regelkolben (9,10) sowohl in ihrer auseinandergeschobenen als auch in ihrer gegeneinandergeschobenen Endstellung gemeinsam in der Innenbohrung (2) verschiebbar sind, dadurch gekennzeichnet, daß die Abstützbereiche (20, 37) für die auseinandergeschobene Endstellung zwischen der Kopplungsvorrichtung (30a, 30b) und den beiden Regelkolben (9, 10) kugelgelenkartig ausgebildet sind.

2. Mengenteiler nach Anspruch 1, dadurch gekennzeichnet, daß auch die Abstützbereiche (29, 39) für die gegeneinandergeschobene Endstellung zwischen der Kopplungsvorrichtung (30b) und den beiden Regelkolben (9, 10) kugelgelenkartig ausgebildet sind.

3. Mengenteiler nach Anspruch 1 oder 2, dadurch gekennzeichnet, daß die Kopplungsvorrichtung (30a, 30b) ein durchgehendes und in beide Regelkolben (9, 10) eingreifendes Zug — und Druckelement (31a, 31b) ist, das nahe jeweils einem Ende als ein innerhalb des jeweiligen Regelkolbens liegender Teil (36) des Kugelgelenks ausgebildet ist, dessen anderer Teil (20) im Regelkolben ausgebildet ist.

4. Mengenteiler nach Anspruch 3, dadurch gekennzeichnet, daß Zug- und Druckelement ein zylindrischer Schaft (31a, 31b) mit einem den Innendurchmesser der Regelkolben (9, 10) erheblich unterschreitenden Außendurchmesser ist, der nahe seinen freien Enden (38) jeweils einen kopfartigen Zugteil (36) mit einer Lagerfläche (37) aufweist, daß die Lagerflächen (37) beider Zugteile (36) zueinander weisen, daß jeder Regelkolben (9, 10) am den den Zugteil aufnehmenden Ende (17) trichterförmig bis auf einen den Schaft (31a, 31b) führenden Ringflansch (18) eingezogen ist und innenseitig eine Auflagefläche (20) für die Lagerfläche (37) aufweist, und daß entweder die Lagerflächen (37) oder die Auflageflächen (20) kugelig ausgebildet sind.

5. Mengenteiler nach Anspruch 4, dadurch gekennzeichnet, daß die Lagerflächen (37) kugelig und die Auflageflächen (20) kegelig ausgebildet sind.

6. Mengenteiler nach Anspruch 5, dadurch gekennzeichnet, daß der Zugteil (36) eine auf dem Schaft (31a) aufgeschraubte Mutter, vorzugsweise Sechskantmutter, ist, die zur Bildung der Lagerfläche (37) an einer Seite ballig ausgebildet ist.

7. Mengenteiler nach einem der Ansprüche 4 bis 6, dadurch gekennzeichnet, daß der Schaft (31a) in der Mitte seiner Längserstreckung einen Bund (32) mit Anlageflächen (33) für die Ringflansche (18) bzw. die Enden (17) beider Regelhülsen (9, 10) aufweist.

8. Mengenteiler nach einem der Ansprüche 4 bis 6, dadurch gekennzeichnet, daß die Ringflansche (18) an ihren gegeneinanderweisenden Stirnflächen zur gegenseitigen, unmittelbaren Anlage mit auf die Bohrungslängsachse senkrecht stehenden Anlageflächen (34) versehen sind.

9. Mengenteiler nach einem der Ansprüche 2 bis 6, dadurch gekennzeichnet, daß die freien Enden (39) des Schafts (31b) kugelig ausgebildet sind, und daß im Inneren jedes Regelkolbens (10) eine kegelige Auflagefläche (29) für ein Schaftende angeordnet ist.

10. Mengenteiler nach einem der Ansprüche 1 bis 9, dadurch gekennzeichnet, daß in jedem Regelkoben (9, 10) eine Durchflußblende (23a, 23b) mit vorbestimmter Blendenöffnungsgröße austauschbar eingesetzt ist.

11. Mengenteiler nach Anspruch 10, dadurch gekennzeichnet, daß die Durchflußblenden (23a, 23b) eingeschraubt sind.

12. Mengenteiler nach Anspruch 11, dadurch gekennzeichnet, daß die Durchflußblenden (23a, 23b) Ansatzöffnungen (25) für ein Schraubwerkzeug aufweisen.

13. Mengenteiler nach Anspruch 9, dadurch gekennzeichnet, daß jede Durchflußblende (23b) an ihrer dem Schaft (31b) zugewandten Seite die Auflagefläche (29) für das Schaftende (39) aufweist.

14. Mengenteiler nach einem der Ansprüche 1 bis 13, dadurch gekennzeichnet, daß die Regelkolben (9, 10) durch sich an den Durchflußblenden (23a, 23b) abstützende Federn (11) aufeinander zu und durch eine den Schaft (31a, 31b) umgebende, weitere Feder (12) voneinander weg beaufschlagt sind.

15. Mengeteiler nach der Ansprüchen 4 und 14, dadurch gekennzeichnet, daß jeder Ringflansch (18) einen Sitz für die weitere Feder (12) bildet.

16. Mengenteiler nach einem der Ansprüche 4 bis 15, dadurch gekennzeichnet, daß im trichterförmigen Ende (17) jedes Regelkolbens (9, 10) wenigstens ein Strömungsdurchgang (19) vorgesehen ist.

## Claims

1. A flow divider for non-load-responsively dividing a hydraulic fluid flow, or for non-load-responsively combining two hydraulic fluid flows in a single hydraulic fluid flow, respectively, comprising a main body having an inner bore (2) and formed with a central main connection (6) and two outwards disposed consumer connections (7) opening into said inner bore, and two hollow-cylindrical control pistons (9, 10) slidably guided in said inner bore (2) and formed with a flow-through passage (23a, 23b) for the hydraulic medium to flow therethrough, and with at least one radial control opening (21) cooperating with one of said consumer connections (7), said pistons being interconnected by coupling means (30a, 30b) for limited movement towards and away from one another, said control pistons (9, 10) being slidable in unison within said inner bore (2) both in their mutually extended end position and in their mutually approached end position, characterized in that the retaining portions (20, 37) for the mutually extended end position between said coupling means (30a, 30b) and the two control pistons (9, 10) are of the ball-and-socket joint type.

2. A flow divider according to claim 1, characterized in that the retaining portions (29, 39) for the mutually approached end position between said coupling means (30b) and said two control pistons (9, 10) are likewise of the ball-and-socket joint type.

3. A flow divider according to claim 1 or 2, characterized in that said coupling means (30a, 30b) is a unitary pull and push element (31a, 31b) engaged within each said control piston (9, 10) and formed adjacent each end as one part (36) of said ball-and-socket joint disposed within the respective control piston, the other part (20) of said joint being formed within said control piston.

4. A flow divider according to claim 3, characterized in that said pull and push element is a cylindrical shaft (31a, 31b) the outer diameter of which is considerably smaller than the interior diameter of said control pistons (9, 10), said shaft comprising adjacent each of its free ends (38) a head-type pull member (36) formed with a bearing surface (37), in that said bearing surfaces (37) of both pull members (36) face towards one another, in that the end portion (17) of each control piston (9, 10) receiving said pull member is contracted in a funnel-shape to end in a annular flange (18) guiding said shaft (31a, 31b) and is interiorly formed with a support surface (20) for said bearing surface (37), and in that either said bearing surfaces (37) or said support surfaces (20) are of spherical configuration.

5. A flow divider according to claim 4, characterized in that said bearing surfaces (37) are of spherical and said support surfaces (20) are of conical configuration.

6. A flow divider according to claim 5, characterized in that said pull member (36) is a nut, preferably a hexagonal nut threaded onto said shaft (31a) and having one of its sides with a conical configuration for forming said bearing surface (37).

7. A flow divider according to any of claims 4 to 6, characterized in that said shaft (31a) has its longitudinal center portion provided with a collar (32) having engagement surfaces (33) for said annular flanges (18), or said end portions (17), respectively, of both said control pistons (9, 10).

8. A flow divider according to any of claims 4 to 6, characterized in that said annular flanges (18) have their end faces facing towards one another formed with engagement surfaces (34) extending perpendicular to the axis of said inner bore for direct engagement with one another.

9. A flow divider according to any of claims 2 to 6, characterized in that the free ends (39) of said shaft (31b) are of spherical configuration, and that a conical support surface (29) for one shaft end portion is provided interior of each control piston (10).

10. A flow divider according to any of claims 1 to 9, characterized in that each control piston (9, 10) has a flow-through insert (23a, 23b) having a predetermined flow-through area replaceably inserted therein.

11. A flow divider according to claim 10, characterized in that said flow-through inserats (23a, 23b) are threadedly mounted.

12. A flow divider according to claim 11, characterized in that said flow-through inserts (23a, 23b) are formed with engagement openings (25) for a threading tool.

13. A flow divider according to claim 9, characterized in that each flow-through insert (23b) has its side facing towards said shaft (31b) formed with said support surface (29) for said shaft end (39).

14. A flow divider according to any of claims 1 to 13, characterized in that said control pistons (9, 10) are biased towards one another by springs (11) supportingly engaging said flow-through inserts (23a, 23b) and are biased away from one another by a further spring (12) surrounding said shaft (31a, 31b).

15. A flow divider according to claims 4 and 14, characterized in that each said annular flange (18) forms a seat for said further spring (12).

16. A flow divider according to any of claims 4 to 15, characterized in that at least one flow passage (19) is provided in the funnel-shaped end portion (17) of each control piston (9, 10).

**Revendications**

1. Diviseur de débit permanent de diviser indépendamment de la charge un courant hydraulique, ou de réunir indépendamment de la charge deux courants hydrauliques en un seul, doté d'un corps de base (1) qui présente un alésage (2), un raccordement principal (6) et deux raccordements aux consommateurs (7) respectivement central et externes par rapport à l'alésage précité, ainsi que deux pistons de réglage (9, 10) cylindriques et creux, parcourus par le fluide hydraulique, mobiles dans l'alésage (2), équipés respectivement d'un limiteur de débit (23a, 23b), ainsi que d'un orifice de réglage au moins (21) radial combiné à un raccordement (7), et reliés par un dispositif d'accouplement (30a, 30b) avec une possibilité de déplacement relatif dans les deux sens et sur un parcours limité, ces deux pistons (9, 10) pouvant se déplacer conjointement dans l'alésage (2) dans leurs deux positions extrêmes de rapprochement et d'écartement, caractérisé en ce que les zones d'appui (20, 37) pour la position finale d'écartement, prévues entre le dispositif d'accouplement (30a, 30b) et les deux pistons (9, 10), sont réalisées sous la forme d'articulations sphériques.

2. Diviseur de débit suivant la revendication 1, caractérisé en ce que les zones d'appui (29, 39) pour la position finale de rapprochement, situées entre le dispositif d'accouplement (30b) et les deux pistons (9, 10), sont également réalisées sous la forme d'articulations sphériques.

3. Diviseur de débit selon une des revendications 1 et 2, caractérisé en ce que le dispositif d'accouplement (30a, 30b) est représenté par un élément de traction/compression (31a, 31b) continu qui s'engage dans les deux pistons (9, 10), cet élément étant réalisé, à proximité de l'une de ses extrémités, sous la forme d'une partie (36) interne au piston de l'articulation sphérique, l'autre partie (20) étant réalisée dans le piston.

4. Diviseur de débit selon la revendication 3, caractérisé en ce que l'élément de traction/compression est une tige cylindrique (31a, 31b), dotée d'un diamètre externe essentiellement inférieur au diamètre interne des pistons (9, 10) et présentant, à proximité de chacune de ses extrémités libres (38), un élément de tension (36) en forme de tête muni d'une portée (37), en ce que les portées (37) des deux éléments (36) sont orientées l'une vers l'autre, en ce que chaque piston (9, 10) est rétréci en entonnoir, sur son extrémité (17) recevant l'élément de tension, jusqu'à une bride annulaire (18) guidant la tige (31a, 31b), et présente dans sa partie interne une surface d'appui (20) pour la portée (37), et en ce qu'une forme sphérique est donnée, soit aux portées (37), soit aux surfaces d'appui (20).

5. Diviseur de débit suivant la revendication 4, caractérisé en ce que les portées (37) sont sphériques et les surfaces d'appui (20) coniques.

6. Diviseur de débit selon la revendication 5, caractérisé en ce que l'élément de tension (36) est un écrou, hexagonal de préférence, vissé sur la tige (31a) et doté d'une face bombée pour réaliser la portée (37).

7. Diviseur de débit selon une quelconque des revendications 4 à 6, caractérisé en ce que la tige (31a) présente une collet central (32) avec des surfaces d'appui (33) pour les brides annulaires (18) ou les extrémités (17) des deux pistons de réglage (9, 10).

8. Diviseur de débit selon une quelconque des revendications 4 à 6, caractérisé en ce que les brides annulaires (18) sont dotées, pour leur contact mutuel et direct, de surfaces d'appui (34) perpendiculaires à l'axe de l'alésage et prévues sur leurs faces frontales tournées l'une vers l'autre.

9. Diviseur de débit selon une quelconque des revendications 2 à 6, caractérisé en ce que les extrémités libres (39) de la tige (31b) présentent une forme sphérique, et en ce qu'une surface d'appui conique (29) est prévue à l'intérieur de chaque piston (10) pour une extrémité de la tige.

10. Diviseur de débit selon une quelconque des revendications 1 à 9, caractérisé en ce que chaque piston de réglage (9, 10) comporte un limiteur de débit (23a, 23b) interchangeable, avec une ouverture de dimension prédéfinie.

11. Diviseur de débit selon la revendication 10, caractérisé en ce que les limiteurs (23a, 23b) sont vissés.

12. Diviseur de débit selon la revendication 11, caractérisé en ce que les limiteurs (23a, 23b) comportent des orifices (25) prévus pour l'insertion d'un outil de vissage.

13. Diviseur de débit selon la revendication 9, caractérisé en ce que la face de chaque limiteur (23b) tournée vers la tige (31b) présente la surface d'appui (29) pour l'extrémité (39) de cette même tige.

14. Diviseur de débit selon une quelconque des revendications 1 à 13, caractérisé en ce que les pistons de réglage (8, 10) sont soumis à l'effet de ressorts (11), qui les rapprochent l'un de l'autre et s'appuient sur les limiteurs (23a, 23b), et à celui d'un autre ressort (12), qui les écarte l'un de l'autre et enveloppe la tige (31a, 31b).

15. Diviseur de débit selon les revendications 4 et 14, caractérisé en ce que chaque bride annulaire (18) constitue un siège pour le ressort (12).

16. Diviseur de débit selon une quelconque des revendications 4 à 15, caractérisé en ce qu'une section d'écoulement au moins (19) est prévue dans l'extrémité rétrécie en entonnoir (17) de chaque piston de réglage (9, 10).

Fig.1b

Fig.1a

11 23b 24a 39 36 19 31b 30b 30a 12 18 17 19 20 37 35 2 8 1

3

7

16

5

4
21
11
23a
25
24
26
9
14
13

21

25 21 29 24a 6 10 34 32 33 31a 34 19 37 36 38 15 27 28 22

0 087 003